**Europäisches Patentamt**

**European Patent Office**

**Office européen des brevets**

(19)

(11) Publication number : **0 518 630 A2**

(12) # EUROPEAN PATENT APPLICATION

(21) Application number : **92305308.6**

(22) Date of filing : **10.06.92**

(51) Int. Cl.⁵ : **G05B 23/02**

(30) Priority : **12.06.91 ZA 914482**
**13.04.92 ZA 922679**

(43) Date of publication of application :
**16.12.92 Bulletin 92/51**

(84) Designated Contracting States :
**AT BE CH DE DK ES FR GB GR IT LI NL PT SE**

(71) Applicant : **AECI LIMITED**
**16th Floor Office Tower Carlton Centre**
**Commissioner Street P.O. Box 1122**
**Johannesburg 2000 Transvaal (ZA)**

(72) Inventor : **Heher, Anthony Douglas**
**102 Matroosberg Road, Waterkloof Park**
**Pretoria, Transvaal (ZA)**

(74) Representative : **Barlow, Roy James**
**J.A. KEMP & CO. 14, South Square, Gray's Inn**
**London WC1R 5LX (GB)**

(54) **Redundant control system.**

(57) An apparatus for redundantly controlling a process comprises a main and a standby processor connected to each other by means of a data link. The state of the standby processor is alterable between an initialisation state and an update state. The master processor initialises the memory of the standby processor when it is in the initialisation state, and updates the memory of the standby processor at a selectable frequency when it is in the update state, by transforming data across the link to be the same as the memory of the main processor. Control of the process is transferred from the main to the standby processor, when the standby processor is in the update state and in the event of failure of the main processor.

FIG. 1

EP 0 518 630 A2

## INTRODUCTION

**THIS INVENTION** relates to a control system and, more particularly, to a system for the control of discontinuous processes.

## BACKGROUND TO THE INVENTION

The control of sequential or batch processes, which are discontinuous in nature, is complex and is usually performed by a single processor executing a stored control program. The control program evaluates measured process parameters (controlled variables) and adjusts, by means of actuators, other process parameters (control variables) to urge the process towards, or to maintain the process at, some desired or ideal performance.

This type of control system will be rendered completely inoperative in the event of processor failure, thereby causing the process to have no form of regulation at all. This can, in critical applications, cause hazardous conditions resulting in fire, explosion or the release of toxic or harmful substances. The hazards can be minimised by introducing a high-reliability safety and shutdown system, but this is expensive.

A common way of guarding against processor failure is to include a redundant processor in the control system. The redundant processor is loaded with a control program which is strictly identical to that in the main processor. The redundant processor is maintained on standby, ready to begin executing the control program in the event of failure of the main processor.

On failure of the main processor, the redundant or standby processor may be activated manually, but this usually requires the intervention of skilled operators to ensure that the changeover from control by the main processor to control by the standby processor does not cause intolerably large upsets to the state of the process. Manual control of the changeover in this manner does not require the data contained in the main and standby processors to be strictly identical. A disadvantage of this method of changeover, however, is that it is difficult and dangerous to use on fast, critical processes such as explosive manufacturing or petrochemical refining plants.

An alternative method of changeover is to pass control of the process from the main to the standby processor without inducing any transients in the process, thereby eliminating the need for manual intervention. This is achieved by ensuring that the data areas in the main and the standby processor are identical at all times. In this manner, a changeover from main to standby processor may be made transparent with no induced process transients at all. A disadvantage of this method is that it requires data in the main processor to be continuously transferred and written to the standby processor. This becomes progressively more difficult to achieve with increasing number of controlled variables and increasing speed of the process.

Transfer of data from the main to the standby processor is usually performed by means of a high-speed data link such as a network. Processor capacity is required to transfer or receive data along the data link. When the data transfer requirements become large in relation to the processor power, insufficient processor capacity may remain to execute the stored control program with sufficient speed, thereby resulting in poor regulation of the controlled process. It is therefore desirable to minimise the data which must be transferred from the main to the standby processor.

In one particular type of dual redundant control system, a discontinuous process is controlled by a main and a standby programmable logic controller (PLC). Data is transferred from the main to the standby PLC along a high-speed data link. This control system has the disadvantage that each PLC must be individually loaded with the control program and data. Furthermore, the loading of the control program must be initiated manually and each PLC must be stopped before loading of the control program and the data. Altering the control program or the configuration of this type of dual redundant control system can therefore be complex, tedious and potentially dangerous.

In another type of dual redundant control system a process is also controlled by two processors executing identical stored control programs, one processor being on standby. No data is transferred from the main to the standby processor and manual intervention is required to eliminate process transients when control of the process passes from the main to the standby processor. This system has the advantage that the data and the entire control program, or only part of it, may be altered without stopping the main or standby processors. Changes and reconfiguration must, however, still be performed individually on both processors, as in the previous system.

PCT patent application No 91/08535 discloses a redundant control system in which a standby processor polls a main processor across a data link, at regular intervals, to request current values of data and configuration information.from the main processor. Data transfer occurs under the control of the standby processor and there is no provision for selective or asynchronous data transfer from the main to the standby processor. The system disclosed in this application is therefore subject to data link overload as described above.

European patent application No 0411295 discloses a redundant control system in which a main and a standby processor each execute identical stored control programs, the standby processor being prevented from regulating the process being controlled. No data is transferred from the main to the standby processor as measured process parameters are transferred directly from the processors. A third or host processor is required to effect changes to the stored control programs on both the main and the standby processors. This system is unnecessarily complex and expensive.

## OBJECT OF THE INVENTION

It is an object of this invention to provide a dual redundant control system which will, at least partially, alleviate the abovementioned difficulties.

## SUMMARY OF THE INVENTION

In accordance with this invention, there is provided a method of redundantly controlling a process, comprising:
manipulating actuators from a main processor having a memory, to control a process by altering controlled process variables and urging the process to a desired performance;
continuously monitoring the state of a standby processor which has a memory and is connected to the main processor by a data link;
initialising the standby processor when it is in a recovery state in which its memory requires initialisation, by forcing the memory of the standby processor to be the same as the memory of the main processor;
altering the state of the standby processor to an update state when initialisation of the memory of the standby processor has been completed;
continuously updating, at a selected frequency, the memory of the standby processor, when the standby processor is in the update state, to be the same as the memory in the main processor by transferring data in a forward direction across the data link from the main processor to the standby processor; and,
when the main processor fails, and the standby processor is in the update state, transferring control of the process to the standby processor by manipulating the actuators from the standby processor to alter the controlled process variables and to urge the process to a desired performance.

Further features of this invention provide for selectively transferring control of the process to the standby processor, when the main processor is operative and the standby processor is in the update state, by causing the standby processor to become the main processor and by simultaneously causing the former main processor to become the new standby processor, and for updating to occur in a reverse direction across the data link.

A still further feature of the invention provides for initialising the standby processor, when it is in the recovery state, by substantially completely copying a control program and data stored in the memory of the main processor, to the memory of the standby processor by means of the data link.

A yet further feature of the invention provides for updating the standby processor by selectively marking any changes which have occurred in the control program and data stored in the memory of the main processor, and copying only the marked changes to the memory of the standby processor by means of the data link.

There is also provided for reducing the amount of updating data to be sent from the main processor to the standby processor by packing the data in the main processor by using data compression, and by decompressing the data in the standby processor after it has been received.

There is also provided for monitoring the data link to detect transmission errors, and for synchronising the updating of the standby processor from the main processor by accumulating, in the standby processor, updating information received from the main processor, during a particular update cycle, and updating the memory of the standby processor only when all of the updating information relating to the update cycle has been correctly received, the accumulated updating information being discarded if transmission errors occur across the data link during the update cycle.

There is also provided for avoiding the necessity of making changes to the configurations, the control programs and the data on both processors of the dual redundant control system by making the said changes to the memory of the main processor and by copying the changes across the data link to the memory of the standby processor when it is in the update state.

The invention extends to provide an apparatus for redundantly controlling a process comprising:
a main processor having a memory and being capable of manipulating actuators to alter controlled process variables and to urge the process to a desired performance;
means for continuously monitoring the state of a standby processor which has a memory and is connected to the main processor by a data link, the state of the standby processor being alterable between a recovery state in which the memory of the standby processor requires initialisation, and an update state in which the memory of the standby processor has been initialised;
means to initialise the memory of the standby processor, when it is in the recovery state, to be the same as the memory of the main processor, and to alter the state of the standby processor to be in an update state when the initialisation is complete;
means to continuously update, at a selectable frequency, the memory of the standby processor, when the standby processor is in the update state, to be the same as the memory in the main processor by transferring data in a forward direction across the data link from the main processor to the standby processor; and,
means to transfer control of the process to the standby processor, when the standby processor is in the update state, and when the main processor fails, the standby processor being capable of manipulating actuators to alter the controlled process variables and to urge the process to a desired performance.

There is also provided for means to selectively transfer control of the process to the standby processor, when the standby processor is in the update state and when the main processor is operative, by causing the standby processor to become the main processor and by simultaneously causing the former main processor to become the new standby processor.

There is also provided for means to cause updating to occur in a reverse direction across the data link when control of the process is selectively transferred to the standby processor.

There is also provided for the standby processor to be initialised, when it is in the initialisation state, by completely copying a control program and data stored in the memory of the main processor, to the memory of the standby processor by means of the data link.

There is also provided for the standby processor to be updated by selectively marking any changes occurring in the control program and data stored in the memory of the main processor, and by copying only the marked changes to the memory of the standby processor by means of the data link.

There is also provided for the data link to be a high-speed network conforming to the Ethernet or IEEE802.3 standards.

In this specification, initialisation is taken to mean the setting of the standby processor to a condition suitable for the start of dual redundant control of a discontinuous process, while updating is taken to mean the making of incremental changes to the contents of the memory of the standby processor.

## BRIEF DESCRIPTION OF THE DRAWINGS

One embodiment of the invention is described below, by way of example only, and with reference to the accompanying drawings in which :

Figure 1 is a diagrammatic view of apparatus for redundantly controlling a process, shown in conjunction with an instrumentation system and a process;

Figure 2 is a diagrammatic view of a processor of the redundant control apparatus of Figure 1, shown in conjunction with an instrumentation system and a process;

Figure 3 is a diagrammatic view of a sequence control environment on the processor of Figure 2; and

Figure 4 is a diagrammatic representation of information flow between two processors of the redundant control apparatus of Figure 1.

## DETAILED DESCRIPTION OF THE DRAWINGS

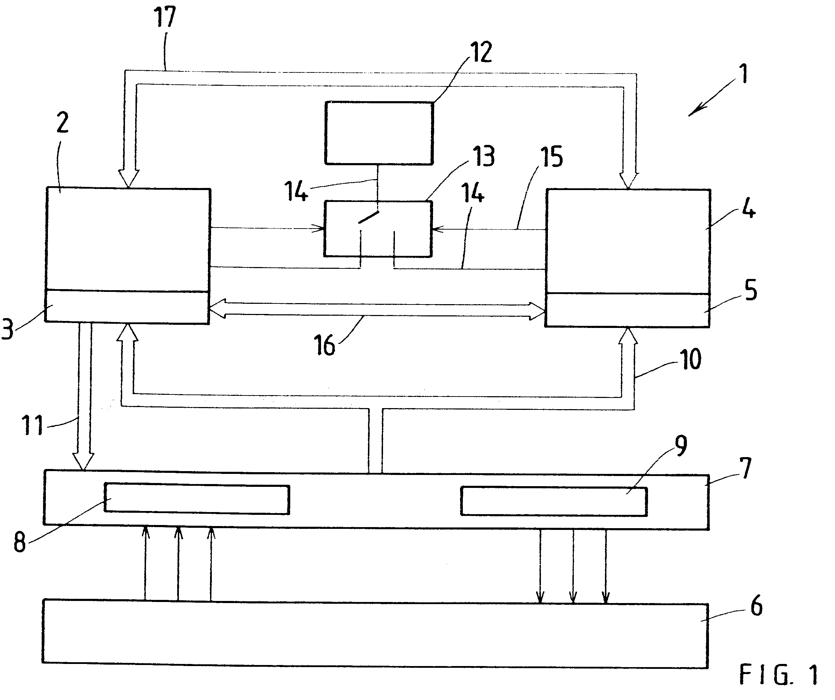

Referring to Figure 1, an apparatus for redundantly controlling a process is indicated generally by numeral (1). The apparatus comprises a first processor (2) with associated memory (3), and a second identical processor (4) with associated memory (5). The first and second processors (2), (4) are connected, in use, to a process (6) such as a petro-chemical refinery or a motor vehicle assembly plant.

The controlling apparatus (1) provides fail-safe control of process (6) in the event of failure of either the first processor (2) or the second processor (4). In Figure 1, the controlling processor is indicated by numeral (2) and is termed the main processor, and the second processor (4) is termed the standby processor. The purpose of the standby processor (4) is to automatically take over the control or regulation of process (6) in the event of failure of the main processor (2), and without inducing undesirable disturbances in the state of the process (6).

In use, the main and the standby processors (2), (4) are connected at (10) and (11) to the process (6) through an instrumentation system (7), comprising a number of actuators (8) and transducers (9). The type of signal connection (10), (11) between the processors (2), (4) and the instrumentation system (7) is either along serial communication links or along a local area network (LAN) or a combination of both.

Physical quantities such as flows, pressures, temperatures, weights and counter values, representing the performance or state of the process (6) are continuously transformed by the transducers (9) into electrical signals and these are continuously transmitted along the signal path (10) to the main and standby processors (2), (4). These signals are repeatedly sampled and stored in the memories (3), (5) respectively of these processors. This process data is therefore always identical on both the main and standby processors (2), (4).

The process (6) is regulated by adjusting one or more control process variables (not shown). Output signals representing the control process variables are adjusted in the memory of the main processor (2) and transmitted along the signal path (11) to actuators (8). The actuators (8), in turn, adjust the physical control process variables to drive the process (6) towards, or to maintain it at, some desired or ideal performance. The output data is only adjusted in the memory (3) of the main processor (2) and must therefore be copied to the memory (5) of the standby processor (4) to ensure that control of the process (6) can be passed to the standby processor in a transient-free manner.

Output signals are adjusted either under the control of an operator (not shown) or automatically by means of a program stored in the memory (3) of the main processor (2). The operator interacts with the process (6) by means of one or more operator stations (12) comprising a visual display monitor (not shown) and a keyboard (not shown) and this type of operator station is well known in the art per se. The operator station is selectively connectable through a switch (13) to either the main processor (2) or to the standby processor (4), along signal cables conforming to the RS-232C standard.

The switch (13) is selectively operable in either a manual mode or an automatic mode. In the manual mode, the operator stations (12) and other peripherals such as printers (not shown) can be selectively connected to either of the processors (2), (4) at the instance of the operator. In the automatic mode, the operation of the switch (13) is remotely controlled through signals generated by switch control programs stored in the processor memories (3), (5) and transmitted to the switch (13) along signal paths at (15).

The switch control program stored in the memory of each processor (2), (4) continuously monitors various physical quantities relating to the operation of the processor hardware, such as power supply voltages and temperatures. The control program also monitors the operation of any program stored in the memory of the processor, by means of software watchdog techniques. In the event of any problem being detected either with the hardware of the processor or with the programs stored in the memory of that processor and being executed by it, the switch control program will operate the switch (13) to connect the peripherals to the other processor.

The processors (2), (4) are connected to each other at (16), to permit data to be transferred, bidirectionally between the respective memories (3), (5) of the processors. Furthermore, each processor (2), (4), can interrogate, along signal path (17), the status of the other processor. Although signal paths (16) and (17) are represented separately in Figure 1, in a preferred embodiment, they would be combined on a single high-speed LAN.

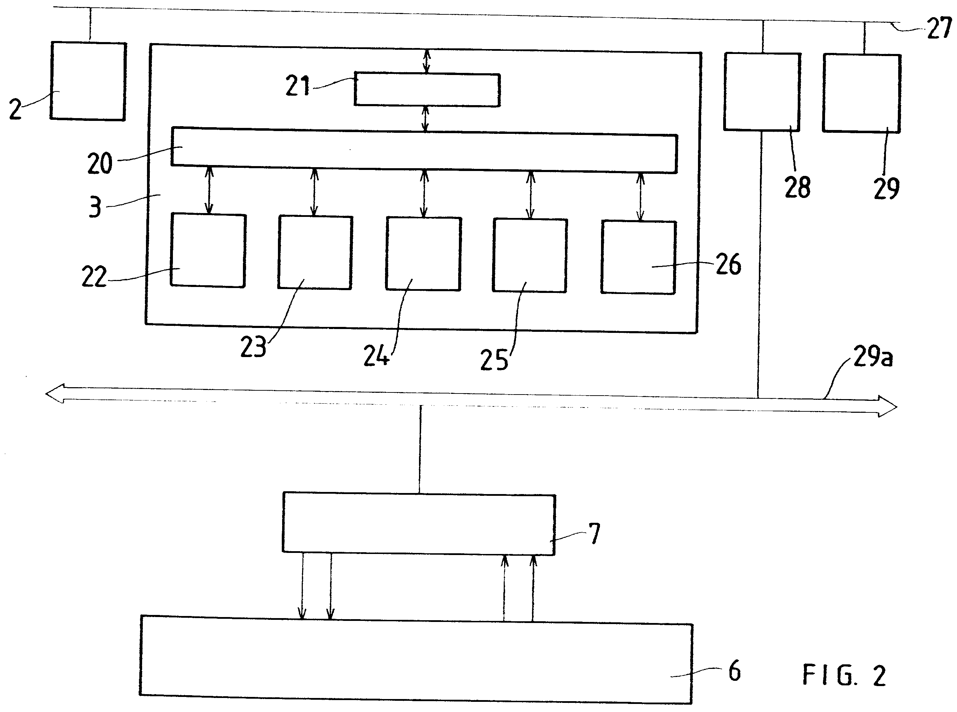

Referring now to Figure 2, where features identical to those of Figure 1 are indicated by like numerals, the main functional components associated with the main processor (2) are indicated. The configuration of the standby processor (3) of the redundant control apparatus (1) of Figure 1 is identical to that of the main processor (2). The processor (2) and memory (3) are connected to a processor bus (27). The processor (2) is a 32-bit minicomputer, such as any model from the well known VAX range of minicomputers, operating under a real-time multitasking executive such as the well-known VMS operating system.

Also connected to the processor bus (27) are interfaces (28, (29) for inputting and outputting data to and from the processor (2). A first interface (28) connects the processor bus (2) to a LAN (29a). In a preferred embodiment, the LAN (29a) conforms to the well known Ethernet /IEEE802.3 standard, or a combination of both, although any other known networking standard such as the Token Ring, Arcnet or FDDI standards can be used without departing from the scope of the invention.

A second interface (29) connected to the processor bus (27) provides a number of serial communication links (not shown) conforming to the RS-232C or RS-422 standards.

The process data representing the state of the process (6) and output data representing the control process variables are stored in a process database (20), resident in the memory (3) of the processor (2). The database (20) is partitioned into shareable areas of memory, each of which can be linked into the task space of one or more stored programs executable by the processor (2). One or more scanner tasks (21) transfer process data from the instrumentation system (7) via the LAN (29a) and store it in the database (20), and also transfer adjusted output signals from the database (20) to actuators in the instrumentation system (7). Where the instrumentation system comprises a number of different types of instrumentation equipment, each with a different communication protocol, the scanner program (21) consists, preferably, of a number of separate tasks, each one transferring data between the process database (20) and one particular type of instrumentation system.

The operator-stations (12) are driven by a number of operator display tasks (22), each task generating one particular type of display on the operator display screen by utilising selected process data from the process database (20). A number of control tasks (23) enable output signals to be automatically adjusted in the process database (20), prior to being scanned out to the instrumentation system (7) by the scanner task(s) (21). The ability to adjust some of the output signals by the operator at the operator stations (12) is preferably incorporated as a function in the operator display tasks (22).

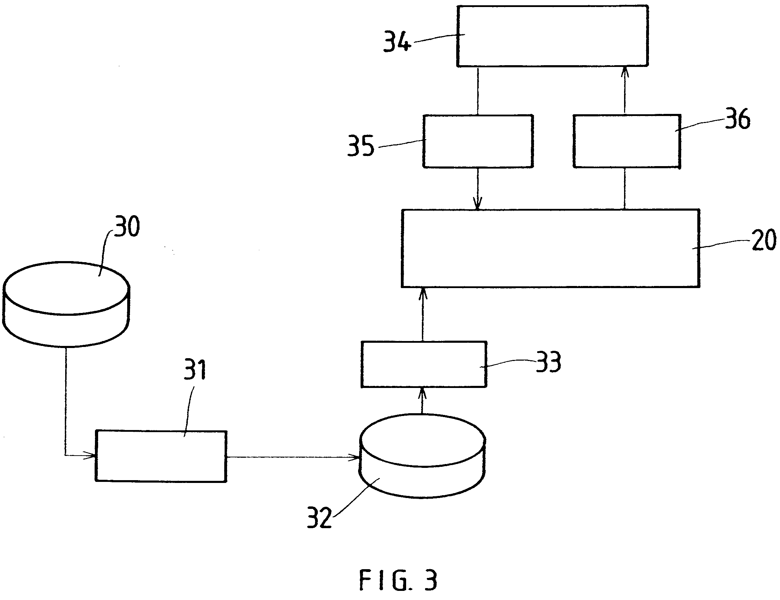

A number of sequence control tasks provide an integrated environment (24) for the control of discontinuous processes such as sequential or batch processes. Referring also to Figure 3 where the sequence control environment is illustrated in greater detail, one or more control sequences and associated data areas (not shown), written in a high level sequencing language, are stored as files (30) on a disk (not shown) associated with the processor (2). The source disk files (30) are translated into intermediate code by a translator task (31) and the interpreted sequences and associated data areas are also stored as disk files (32). The interpreted sequences and data areas (32) are loaded into the process database (20) by a sequence loader task (33). The translated and loaded control sequences are executed by a sequence interpreter task (34) to enable a process (6) to be controlled through algorithms or recipes contained in the logic of the control sequences, as well as through manual intervention of the operator via the operator stations (12). The execution by the interpreter task (34), of any particular control sequence loaded in the process database (20) may be stopped and restarted without suspending the execution of any other loaded control sequences. Similarly, a stopped sequence may be unloaded from the process database (20) by the loader task (33), or a newly translated control sequence may be loaded into the process database (20), without suspending the execution of any other loaded sequences.

The sequence interpreter task (34) operates as a round robin scheduler working on a nominal cycle of one second. During each cycle, the interpreter task (34) will, in turn, execute each loaded sequence. Prior to initiating an execution cycle, the sequence interpreter task (34) obtains exclusive write access to the process database (20) by means of a facility lock (35). This mechanism is well known in the art. At the end of an execution cycle, the facility is released (36) by the interpreter task (34) and any other task in the processor memory can then access the database.

No information on the state of the sequence interpreter task (34) is stored in the private space of the task itself. All the information of the interpreter task (34) is stored in the shared process database (20) instead.

Returning now to Figure 2, a switchover control program (26) regulates the state of the processor (2) and cooperates with an identical program in the other processor of the redundant control system to arbitrate on which processor actively controls the process (6). The mode of operation of the processor (2) is stored in the process database (20). The mode of operation of the processor is either a master mode in which the processor is asserting control of the process (6), a standby mode in which the processor is inhibited from asserting control of the process (6), or an unavailable mode in which the processor is decoupled from the other processor of the redundant control system. For redundant control to be possible, one of the processors must be in the master mode while the other must be in the standby mode. When either of the processors (2), (3) is in the unavailable mode while the other is in the master mode, then control of the process (6) is still possible, but without any redundancy. If both processors (2), (4) are in the unavailable mode, the system has failed completely and no control is possible. Other combinations of processor modes are meaningless and are prevented from occurring by the switchover control software (26) on both processors (2), (4). Any hardware or software malfunction in a processor will cause the switchover control program of that processor to change the mode of that processor to the unavailable state.

A tracking program (25) updates, at regular intervals, the process database of the standby processor, to be the same as the process database (20) of the main processor (2), so that control of the process (6) may be passed to the standby processor at any time, in a transient-free manner.

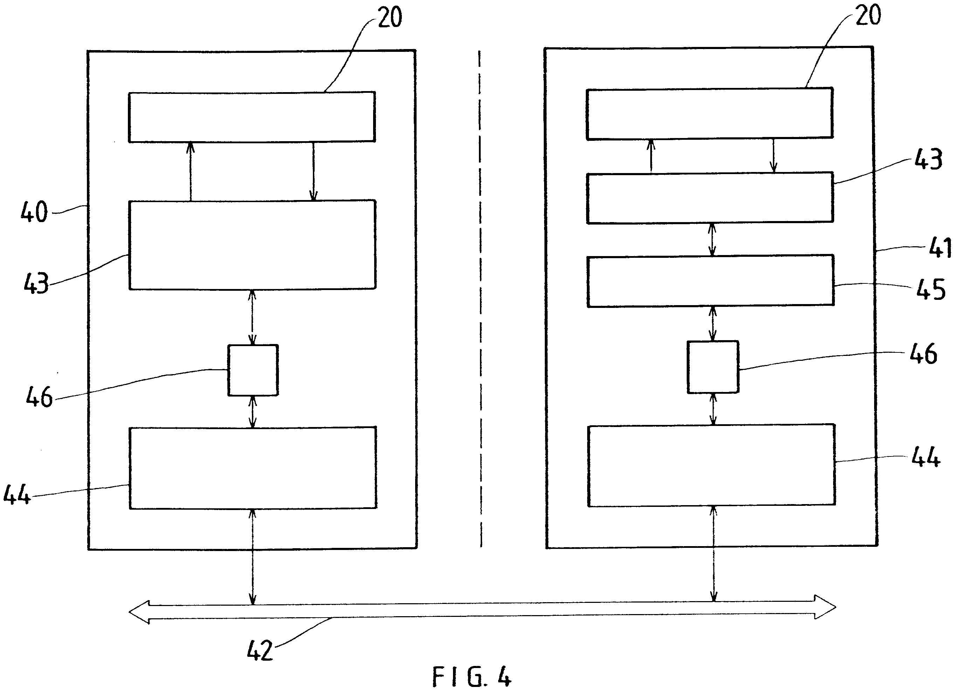

The manner in which data is transferred from the memory of the main processor to the memory of the standby processor is represented in more detail in Figure 4. A data transmitting task (40) resident in the memory of the main processor communicates over a LAN (42), with a data receiving task (41) resident in the memory of the standby processor. Each of the tasks comprises procedures (43) to access the respective process database (20) of the processor on which the task resides, as well as procedures (44) to access the local area network (42). The data receiving task (41) on the standby processor also comprises a number of buffers (45) in which incoming data may be stored. The remainder of each task consists of task control software (46). The database access procedures include a facility lock (not shown) whereby each task (40), (41) can obtain exclusive access to its respective database (20), to the exclusion of all other tasks in the processor.

The transfer of data from the process database (20) on the main processor, to the database (20) on the standby processor occurs in either of two states: recovery and updating. The state of the tracking program (25), either a recovery state or an update state, is also stored in the process database (20).

A recovery state occurs as soon as the standby processor has been started and run up. The state of its memory (5) is indeterminate and needs to be set to a known state. In this state, the data transmission task (40) sequentially transmits the entire contents of the database (20) across the LAN (42) to the standby processor. The transmitted data is received by the data receiving task (41) in the standby processor, where it is buffered and then transferred to the process database (20). At the end of the recovery phase, the process databases (20) of both processors will be in identical, known states. The state of the tracking program (25) is them changed from the recovery state to the update state.

The update state commences when recovery of the standby processor database (20), is complete. The information contained in the process database of the main processor (20) at the end of each computation cycle of the sequence interpreter task, represents a consistent data set which totally defines the state of the control system.

All items of data in the database (20) of the main processor memory (3) which are changed during a particular computation cycle, are marked as such by the various tasks which alter the data, these being, among others, the operator display tasks (22), the control tasks (23), the sequence loader task (33) and the sequence interpreter task (34). At the end of each computation cycle of the sequence interpreter, the data transmission task (40) obtains exclusive access to the database (20) by asserting a facility lock, thereby ensuring the consistency of the database contents.

The data transmission task (40) scans the contents of the database to detect items of data which have changed, and transmits this data across the LAN (42) to the standby processor, and the facility lock on the process database (20) is released when all the changed data have been transmitted. The transmitted. data is received by the data receiving task (41) in the standby processor, where it is first buffered and then unpacked from the buffers (45) into the correct locations in the process database (20). By only transferring the changes which have occurred during a particular update cycle, the amount of data to be transferred across the network (42), is minimised, and this will not degrade the performance of the redundant control system unduly.

When the standby processor (4) is in the update state, its mode may be manually forced from standby to master, thereby causing it to assert control of the process (6). The will cause the switch control programs (26) of the main processor (2) to change the mode of that processor from master to standby and will cause data transfer during the recovery and update states to occur in the reverse direction across the LAN (42), that is, from the former standby (now main) processor (4) to the former main (now standby) processor (2). In this manner, control may be manually switched between the processors (2), (4) even under conditions in which there are no fault conditions in the main processor (2).

The data to be transferred during recovery or during any particular update cycle, must be packed into LAN datagrams by the data transmission task (40) in the main processor. An Ethernet/IEEE802.3 datagram may be up to 1500 bytes long and it is desirable to use datagrams of maximum length wherever possible, in order to maximise data throughput. It is therefore important to check that the datagrams received by the data receiving task (41) in the standby processor, are consistent and have not been corrupted during transmission. To achieve this, the data transmission task (40) includes a unique sequential transaction number in each datagram, which number can then be examined by the data receiving task to detect any gross transmission errors. As a further safety feature, each data type within a particular datagram is also demarcated by a transaction number, and these can be utilised by the data receiving task to detect any data corruption within a datagram. In the event of any data inconsistency being detected in this manner or any network error occurring, the database (20) of the standby machine is assumed to have been corrupted, and the data transmission task (40) in the main processor will revert back to recovery state and then resume the update state once recovery is completed.

The data transmission task also includes framing information into the datagrams, to enable the data receiving task (41) in the standby processor to detect when all the data for a particular update cycle has been received. In order to ensure consistency of the process database (20) of the standby processor, the received datagrams for a particular update cycle are, ideally, stored in buffers (45) in the data receiving task until an end-of-frame is detected, whereupon the data is unpacked into the process database (20).

In certain instances, however, such as during periods of intense process activity, there might be insufficient buffer space (45) in the data receiving task (41) to hold all of the data transmitted during a particular update cycle. In such a situation, the data receiving task (41) will have to free some buffer space by updating the process database (20) of the standby machine, before the end-of-frame is detected. This situation is potentially troublesome because, in the event of a transmission error occurring during the remainder of the update cycle, it will be impossible for the process database (20) to revert back to the known consistent state at the end of the previous update cycle. Therefore the database (20) of the standby machine will require recovery, and redundancy will be temporarily lost until recovery is completed.

The redundant control system (1) is also tolerant of temporary processor overload. If, during a particular update cycle, the data transmission task (40) is unable to transmit all of the update data due to processor overload, the untransmitted update data is carried over to the next succeeding update cycle when it will be transmitted together with changes which occurred during that succeeding update cycle. The partially transmitted data which has been received by the data receiving task (41) in the standby processor is retained in the buffer space (45) of that task, and is not transferred to the database (20) until the completion of the succeeding update cycle, and thereby ensuring that the database remains in a known and consistent state at all times. Clearly, in cases of severe processor overload, redundancy will be permanently lost and this is indicative that more powerful processors are required to control the process (6).

For as long as the main processor (2) is running without any hardware or software fault being detected, the standby processor (4) is prevented by the switchover control program (26) on Figure 2, from assuming control of the process (6). The standby processor will assume control of the process either when the main processor detects that it has a software malfunction, or when the standby processor detects a hardware or software malfunction on the main processor. Furthermore, a manual transfer of control is possible, but only when the tracking software (25) of Figure 2 is in the update state.

In order to further minimise the number of datagrams transmitted across the LAN (42) during a particular update cycle, the data transmission task (40) on the main processor applies well known data compression techniques when packing update data into datagrams for transmission. The data receiving task (41) decompresses the received datagrams before storing the received information in the buffers (45).

An important feature of this type of redundant control system is that the need to duplicate changes to control sequences on both the main and the standby processors, is eliminated. With the invention as it stands, a control sequence which is altered in the database of the main processor is automatically duplicated in the process database (20) of the standby processor by the tracking mechanism described above.

It is clearly evident, furthermore, that the construction of the redundant control system may be varied in many ways without departing from the scope of the invention. For example, and with reference to Figure 1, the topology of the control system could be altered so that process data is only scanned into the main processor memory along signal path (10). This would necessitate process data being transferred to, and updated on, the standby processor via the tracking mechanism outlined in this embodiment.

The invention therefore provides a flexible and effective means of providing a control system for discontinuous processes which is fault tolerant and simple to modify and reconfigure.

## Claims

1. A method of redundantly controlling a process, comprising the steps of:
   manipulating actuators from a main processor having a memory, to control a process by altering controlled process variables and urging the process to a desired performance;
   continuously monitoring the state of a standby processor which has a memory and is connected to the main processor by a data link,
   initialising the standby processor when it is in a recovery state in which its memory requires initialisation, by forcing the memory of the standby processor to be the same as the memory of the main processor;
   altering the state of the standby processor to an update state when initialisation of the memory of the standby processor has been completed;
   continuously updating, at a selected frequency, the memory of the standby processor, when the standby processor is in the update state, to be the same as the memory in the main processor by transferring data in a forward direction across the data link from the main processor to the standby processor; and,
   when the main processor fails, and the standby processor is in the update state, transferring control of the process to the standby processor by manipulating the actuators from the standby processor to alter the controlled process variables and to urge the process to a desired performance.

2. A method of redundantly controlling a process as claimed in claim 1 characterised in that control of the process is selectively also transferred to the standby processor, when the main processor is operative and the standby processor is in the update state, by causing the standby processor to become the main processor and by simultaneously causing the former main processor to become the new standby processor.

3. A method of redundantly controlling a process as claimed in claim 2 characterised in that updating occurs in a reverse direction across the data link.

4. A method of redundantly controlling a process as claimed in any one of claims 1 to 3 characterised in that the standby processor is initialised, when it is in the recovery state, by substantially completely copying a control program and data stored in the memory of the main processor, to the memory of the standby processor by means of the data link.

5. A method of redundantly controlling a process as claimed in any one of claims 1 to 4 characterised in that the standby processor is updated by selectively marking any changes which have occurred in the control program and data stored in the memory of the main processor, and copying only the marked changes to the memory of the standby processor by means of the data link.

6. A method of redundantly controlling a process as claimed in any one of the preceding claims characterised in that the amount of updating data to be sent from the main processor to the standby processor is reduced by packing the data in the main processor by using data compression, and by decompressing the data in the standby processor after it has been received.

7. A method of redundantly controlling a process as claimed in any one of the preceding claims characterised in that the data link is monitored to detect transmission errors.

8. A method of redundantly controlling a process as claimed in claim 7 characterised in that updating of the standby process is synchronised by accumulating, in the standby processor, updating information received from the main processor, during a particular update cycle, and updating the memory of the standby processor only when all of the updating information relating to the update cycle has been correctly received, the accumulated updating information being discarded if transmission errors occur across the data link during the update cycle.

9. A method of redundantly controlling a process as claimed in any one of the preceding claims characterised in that the necessity of making changes to the configurations, the control programs and the data on both processors is avoided by making the said changes to the memory of the main processor and by copying the changes across the data link to the memory of the standby processor when it is in the update state.

10. An apparatus for redundantly controlling a process comprising:
a main processor having a memory and capable of manipulating actuators to alter controlled process variables and to urge the process to a desired performance;
means for continuously monitoring the state of a standby processor which has a memory and is connected to the main processor by a data link, characterised in that:
the state of the standby processor is alterable between a recovery state in which the memory of the standby processor requires initialisation, and an update state in which the memory of the standby processor has been initialised; and the apparatus includes:
means to initialise the memory of the standby processor, when it is in the recovery state, to be the same as the memory of the main processor, and to alter the state of the standby processor to be in an update state when the initialisation is complete;
means to continuously update, at a selectable frequency, the memory of the standby processor, when the standby processor is in the update state, to be the same as the memory in the main processor by transferring data in a forward direction across the data link from the main processor to the standby processor; and,
means to transfer control of the process to the. standby processor, when the standby processor is in the update state, and when the main processor fails, the standby processor being capable of manipulating actuators to alter the controlled process variables and to urge the process to a desired performance.

11. An apparatus for redundantly controlling a process as claimed in claim 10 characterised in that it includes a means to selectively transfer control of the process to the standby processor, when the standby processor is in the update state and when the main processor is operative, by causing the standby processor to become the main processor and by simultaneously causing the former main processor to become the new standby processor.

12. An apparatus for redundantly controlling a process as claimed in claim 11 characterised in that it includes a means to cause updating to occur in a reverse direction across the data link when control of the process is selectively transferred to the standby processor.

13. An apparatus for redundantly controlling a process as claimed in any one of claims 10 to 12 characterised in that the data link is a high-speed network conforming to the Ethernet IEEE802-4 networking standards.

FIG. 1

FIG. 2

EP 0 518 630 A2

FIG. 3

FIG. 4

EP 0 518 630 A2